**Europäisches Patentamt**

**European Patent Office**

**Office européen des brevets**

(11) Numéro de publication : **0 333 597 B1**

## (12) FASCICULE DE BREVET EUROPEEN

(45) Date de publication du fascicule du brevet :
**21.10.92 Bulletin 92/43**

(51) Int. Cl.⁵ : **G01M 11/00,** G02B 27/00, G02B 23/06

(21) Numéro de dépôt : **89400759.0**

(22) Date de dépôt : **17.03.89**

(54) **Compensateur variable des différents ordres d'aberration sphérique pour vérifier la forme de la surface d'un miroir asphérique et son application.**

(30) Priorité : **17.03.88 FR 8803437**

(43) Date de publication de la demande :
**20.09.89 Bulletin 89/38**

(45) Mention de la délivrance du brevet :
**21.10.92 Bulletin 92/43**

(84) Etats contractants désignés :
**DE**

(56) Documents cités :
**EP-A- 0 115 461**
**US-A- 4 523 842**
**APPLIED OPTICS, vol. 2, no. 2, février 1963, pages 153-155; A. OFFNER: "A Null Corrector for Paraboloidal Mirrors"**
**REVUE D'OPTIQUE THEORIQUE ET INSTRU-MENTALE, no. 2, février 1927, pages 49-55; M. A. COUDER: "Procédé d'examen d'un miroir-concave non sphérique"**
**AMATEUR TELESCOPE MAKING, Scientific American, NY 1953, book III, pages 149-153; H. E. DALL: "A Null Test for Paraboloids"**

(73) Titulaire : **R.E.O.S.C. (RECHERCHES ET ETUDES D'OPTIQUE ET DE SCIENCES CONNEXES)**
**10, rue des Ecoles**
**Ballainvilliers F-91160 Longjumeau (FR)**

(72) Inventeur : **Blin, Valérie**
**16, Rue Corbon**
**F-75015 Paris (FR)**
Inventeur : **Espiard, Jean**
**16, Rue Corbon**
**F-75015 Paris (FR)**
Inventeur : **Geyl, Roland**
**5, Rue Henri Thirard**
**F-94240 l'Hay-les-Roses (FR)**

(74) Mandataire : **Schrimpf, Robert et al**
**Cabinet Regimbeau 26, Avenue Kléber**
**F-75116 Paris (FR)**

EP 0 333 597 B1

## Description

La présente invention concerne un compensateur variable des différents ordres d'aberration sphérique pour vérifier la forme de la surface d'un miroir asphérique et son application.

La réalisation précise d'une surface optique un peu grande, un miroir de télescope par exemple, n'est jamais obtenue automatiquement ; un travail de retouche locale, dirigé et contrôlé par des examens optiques, est toujours nécessaire pour amener la courbe méridienne a se confondre pratiquement avec la forme que lui impose le calcul.

Une technique classique pour fabriquer un miroir asphérique consiste à fabriquer un miroir à peu près sphérique et à enlever de la matière jusqu'à obtenir la forme asphérique désirée.

Il est nécessaire de vérifier si cet enlèvement de matière ne génère pas des défauts tels que astigmatisme, festonnage et défauts zonaux de haute fréquence, pendant la progression de l'asphérisation.

Ce contrôle est possible en utilisant un compensateur d'aberration sphérique capable de suivre le travail d'asphérisation de l'opticien de manière progressive et ce depuis la forme voisine de la sphère d'où démarre l'asphérisation jusqu'à la forme asphérique requise.

Le compensateur est un système de lentilles placé sur le trajet des rayons émis par une source lumineuse ponctuelle et réfléchis par le miroir, pour produire une aberration opposée à celle que le calcul indique pour le miroir que l'on veut réaliser.

La retouche du miroir est réalisée de façon à obtenir une image finale stigmatique.

Le principe du compensateur est connu depuis longtemps et l'on peut se reporter par exemple à l'article "Procédé d'examen d'un miroir concave non sphérique" de A. COUDER (Revue d'optique théorique et instrumentale, février 1927).

Pour suivre la progression de l'asphérisation, il est connu de faire varier la distance des lentilles du compensateur au point source.

Jusqu'à présent, et pour diverses raisons, les compensateurs variables (compensateur de R. S. Hilbert et M. P. RIMMER, compensateur de R. SHAFER), n'ont pu être utilisés qu'avec des miroirs de petite dimension et de faible ouverture, F/4 étant généralement le maximum.

Pour contrôler la progression de l'asphérisation d'un grand miroir, soit typiquement d'un miroir dont le nombre d'ouverture est de l'ordre de F/1,7 à F/2 et dont le diamètre est de l'ordre de 4 à 8 m, il est nécessaire de pouvoir compenser en continu les ordres supérieurs d'aberration sphérique, des 5ème et 7ème ordres.

On sait compenser des ordres supérieurs au moyen d'un compensateur à deux lentilles (Article "A null Corrector for Paraboloïdal Mirrors" de Abe OFFNER dans Applied Optics, fev. 1983, vol. 2. N° 2) mais ce compensateur n'est pas variable et ne permet pas par conséquent de suivre la progression de l'asphérisation.

la présente invention a pour objet un compensateur variable apte à compenser les ordres supérieurs d'aberration sphérique, permettant de suivre la progression de l'asphérisation d'un miroir asphérique de grande ouverture et de grand diamètre, notamment la fabrication d'un miroir de télescope.

Le compensateur de l'invention qui comprend un ensemble déplaçable de lentille est caractérisé par le fait qu'il comprend également un ensemble fixe de lentilles, les deux ensembles ayant même axe optique et étant disposés à distance l'un de l'autre, l'ensemble fixe possédant une première lentille placée au voisinage du centre de courbure du miroir, c'est-à-dire dans la caustique d'aberration sphérique du miroir et destinée à faciliter la correction des ordres supérieurs d'aberration, cette lentille étant suivie par une deuxième lentille dont la forme (cambrure) est déterminée pour compenser l'aberration sphérique du 3ème ordre du miroir et dont la puissance est choisie pour optimiser au mieux l'encombrement et la facilité de réduction des ordres supérieurs, et l'ensemble mobile étant constitué par un système afocal à trois lentilles calculé de façon à compenser l'aberration produite par le miroir quand son coefficient d'asphérisation varie de -0,5 à -1 et au delà.

En service, l'ensemble fixe est situé entre l'ensemble mobile et le centre de courbure du miroir, l'une des lentilles de l'ensemble fixe étant située au voisinage immédiat dudit centre de courbure, et l'ensemble mobile est rapproché de l'ensemble fixe au fur et à mesure de la progression de l'asphérisation.

La forme des lentilles est choisie, entre autres, en fonction de l'indice de réfraction du matériau utilisé, de façon en soi connue.

Pour calculer un compensateur selon l'invention, on peut procéder comme suit.

On commence par calculer un compensateur comportant une lentille placée dans la caustique et une deuxième lentille dont la forme, calculée dans le 3ème ordre, compense l'aberration sphérique du 3ème ordre du miroir sphérique, celui-ci étant supposé avoir un coefficient d'asphérisation de - 0.5. La puissance de cette lentille est liée au diamètre et à l'encombrement que l'on consent à donner au compensateur, et tenant compte du fait que plus la lentille est puissante, plus il sera difficile de compenser les ordres supérieurs.

Après optimisation de cette combinaison avec un coefficient d'asphérisation du miroir de -0.5, on ajoute les trois lentilles du groupe mobile en les plaçant au voisinage de la deuxième lentille du compensateur fixe.

2

L'ensemble de ces trois lentilles doit être une combinaison afocale afin que sa translation laisse toujours superposées la source et l'image qu'il en donne. En imposant ces conditions aux données de départ de l'optimisation, avec en plus une valeur de -1 comme coefficient d'asphérisation du miroir, le résultat final est rapidement obtenu.

On décrira ci-après deux exemples de compensateurs conformes à la présente invention, en référence aux deux figures du dessin joint qui montre chacune trois schémas optiques du compensateur correspondant à trois étapes d'asphérisation du miroir.

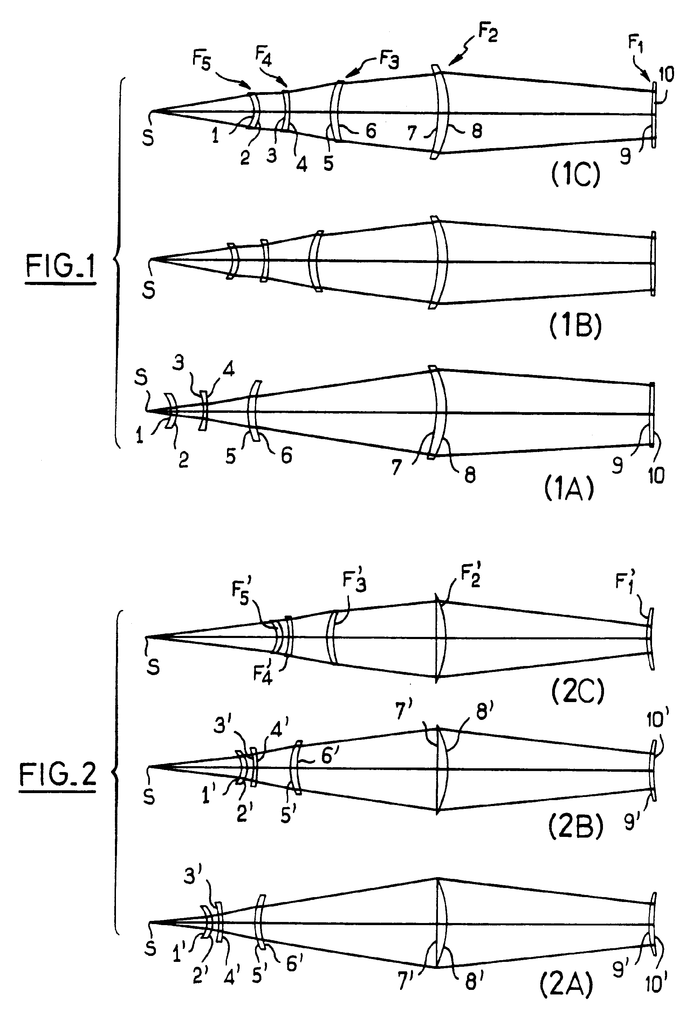

Le compensateur de la figure 1 est destiné à servir en lumière non visible dans un dispositif de contrôle utilisant un interféromètre dont la source monochromatique S est un laser infra-rouge à 10 microns.

Le compensateur représenté sur la figure 1 est constitué de deux lentilles fixes $F_1$, $F_2$ et d'un groupe de trois lentilles $F_3$, $F_4$, $F_5$ qui sont déplaçables ensemble. Ces lentilles sont en sulfure de zinc d'indice 2,200.

Les caractéristiques des lentilles du compensateur, rayons de courbure, épaisseurs, intervalles d'air, sont indiquées sur le tableau I ci-après où les numéros des surfaces renvoient aux repères correspondants indiqués sur la figure 1A.

## TABLEAU I

| Surface N° | Rayon | Epaisseur du milieu suivant | Nature du milieu suivant | Demi-diamètre utile |
|---|---|---|---|---|
| 1 | -77,0731 | 15,0000 | ZNS | -41,5 |
| 2 | -75,0905 | 61,8350 | AIR | -43,2 |
| 3 | -162,1046 | 10,0000 | ZNS | -48,7 |
| 4 | -323,7274 | 98,9750 | AIR | -50,4 |
| 5 | 193,2088 | 17,5000 | ZNS | -72,7 |
| 6 | 223,6422 | 450,0000 | AIR | -75,1 |
| 7 | -354,1595 | 25,0000 | ZNS | -112,5 |
| 8 | -243,7634 | 499,9674 | AIR | -116,1 |
| 9 | 3024,9872 | 10,0000 | ZNS | -80,1 |
| 10 | -1873 | | AIR | -79,8 |

Dans ce tableau, qui correspond à la disposition de lentilles représentée sur la figure 1A pour un coefficient

3

d'asphérisation du miroir égal à -0,547, la distance entre la lentille $F_3$ de l'ensemble déplaçable et la lentille $F_2$ de l'ensemble fixe est indiquée comme étant égale à 450 mm. Dans le cas de la figure 1B, qui correspond à un coefficient d'asphérisation égal à 0,7976, cette distance est égale à 300 mm et, dans celui de la figure 1C, qui correspond à un coefficient d'asphérisation égal à -1, cette distance est égale à 250 mm. On pourrait encore diminuer cette distance si l'asphérisation devait augmenter.

Le miroir pris en compte pour le calcul de cet exemple de réalisation de l'invention est un miroir de 8 mètres de diamètre, de 27 200 mm de rayon de courbure, soit une ouverture de F/1.7 et dont le coefficient d'asphérisation doit être, en fin de polissage, égal à -1.

Pour les différentes positions du groupe de lentilles qui assure l'effet de zoom, l'écart quadratique moyen de la surface d'onde obtenue est de L/150 quand le coefficient d'asphérisation est égal à -1 et de L/60 quand ce coefficient est égal à -0.5, ceci pour L = 10 microns. La qualité de cette correction indique nettement que le système est limité par la diffraction et permet d'évaluer des défauts de la surface d'onde du 1/10 frange soit, finalement sur le miroir, un défaut de 0.5 micron.

Les lentilles sont réalisées en sulfure de zinc, qui est un matériau transparent pour la longueur d'onde de 10 microns et également pour les longueurs d'ondes du spectre visible, ce qui autorise d'utiliser ce compensateur pour contrôler la mise en forme asphérique au stade du douci et également au début du polissage.

Cet exemple n'est pas limitatif, ce compensateur pouvant être évidemment réalisé en d'autres matériaux pour être utilisé dans le spectre visible.

Le compensateur de la figure 2 constitue précisément un exemple d'application de l'invention à la définition d'un compensateur pour le domaine visible (longueur d'onde 632,8 nm). Les lentilles $F'_1$ à $F'_5$ du compensateur sont en baryum-chrome (en abrégé BC) d'indice 1,618 et leurs caractéristiques sont indiquées sur le Tableau II ci-après où les numéros des surfaces renvoient aux repères correspondants indiqués sur la figure 2B.

## TABLEAU II

| Surface N° | Rayon | Epaisseur du milieu suivant | Nature du milieu suivant | Demi-diamètre utile |
|---|---|---|---|---|
| 1' | -59,8236 | 15,0000 | BC | -41,5 |
| 2' | -62,6334 | 18,1785 | AIR | -43,2 |
| 3' | -166,6315 | 10,0000 | BC | -48,7 |
| 4' | -371,2067 | 90,8954 | AIR | -50,4 |
| 5' | 166,6931 | 17,50000 | BC | -72,7 |
| 6' | 217,6288 | 391,9605 | AIR | -75,1 |
| 7' | -0,1647E+04 | 0,2500E+02 | BC | -112,5 |
| 8' | -265,1801 | 555,8668 | AIR | -116,1 |
| 9' | 339,6277 | 10,0000 | BC | -80,1 |
| 10' | 604,9 | | AIR | -79,8 |

La valeur 391,9605 du tableau est celle de la distance qui sépare l'ensemble mobile de l'ensemble fixe lorsque le degré d'asphérisation est -0,67586 (figure 2B). Dans le cas de la figure 1B, cette valeur est 491,9605 pour un degré d'asphérisation de -0,54567 et, dans le cas de la figure 1C, cette valeur est 291,9605 pour un degré d'asphérisation de -1.

## Revendications

1. Compensateur variable d'aberration sphérique pour vérifier la forme de la surface d'un miroir asphérique, qui comprend un ensemble déplaçable de lentilles, caractérisé en ce qu'il comprend également un ensemble fixe de lentilles, les deux ensembles ayant même axe optique et étant disposés à distance l'un de l'autre, ledit ensemble fixe possèdant une première lentille ($F_1$, $F'_1$) placée au voisinage du centre de courbure du miroir, c'est-à-dire dans la caustique d'aberration sphérique du miroir et destinée à faciliter la correction des ordres supérieurs d'aberration, cette lentille étant suivie par une deuxième lentille ($F_2$ ; $F'_2$) dont la forme (cambrure) est déterminée pour compenser l'aberration sphérique du 3ème ordre du miroir et dont la puissance est choisie pour optimiser au mieux l'encombrement et la facilité de réduction des ordres supérieurs, et ledit l'ensemble mobile étant constitué par un système afocal à trois tentilles $(F_3,F_4,F_5)$ ; $F'_3,F'_4,F'_5)$ calculé de façon à compenser l'aberration produite par le miroir quand son coefficient d'asphérisation varie de -0,5 à -1 et au delà.

2. Application d'un compensateur selon la revendication 1 à la vérification de la forme de la surface d'un miroir asphérique pendant la réalisation progressive de l'asphérisation, caractérisée en ce qu'une des lentilles de l'ensemble fixe est située au voisinage immédiat dudit centre de courbure, et l'ensemble mobile est rapproché de l'ensemble fixe au fur et à mesure de la progression de l'asphérisation.

3. Application selon la revendication 2, caractérisée en ce que le miroir est un miroir dont le nombre d'ouverture est de l'ordre de F/1,7 à F/2 et dont le diamètre est de l'ordre de 4 à 8 m.

## Patentansprüche

1. Variabler Kompensator für sphärische Aberration zum Prüfen der Oberflächenform eines asphärischen Spiegels, enthaltend eine verstellbare Linsengruppe, **dadurch gekennzeichnet**, daß er weiterhin eine feste Linsengruppe enthält, wobei die zwei Gruppen dieselbe optische Achse haben und in Distanz zueinander angeordnet sind, wobei die feste Gruppe eine erste Linse $(F_1, F'_1)$ enthält, die benachbart des Krümmungsmittelpunktes des Spiegels ist, d.h. in der Brennfläche der sphärischen Aberration des Spiegels, und dazu bestimmt ist, die Korrektur höherer Aberrationsordnungen zu erleichtern, wobei dieser Linse eine zweite Linse $(F_2; F'_2)$ folgt, deren Form (leichte Krümmung) so bestimmt ist, daß die sphärische Aberration dritter Ordnung des Spiegels kompensiert wird, und deren Brechkraft so gewählt ist, daß der Platzbedarf und das Reduktionsvermögen für höhere Ordnungen bestmöglich optimiert werden, und daß die bewegliche Gruppe von einem aphokalen System aus drei Linsen $(F_3, F_4, F_5)$ ; $F'_3, F'_4, F'_5)$ gebildet ist, das so berechnet ist, daß die Aberration kompensiert wird, die von dem Spiegel erzeugt wird, wenn sein Asphärisationskoeffizient zwischen -0,5 und -1 und darüber schwankt.

2. Anwendung eines Kompensators nach Anspruch 1 zur Prüfung der Oberflächenform eines asphärischen Spiegels bei der progressiven Realisierung der Asphärisation, **dadurch gekennzeichnet**, daß eine der Linsen der festen Gruppe unmittelbar benachbart dem Krümmungsmittelpunkt angeordnet ist, und daß die bewegliche Gruppe der festen Gruppe in dem Umfang angenähert wird, wie die Asphärisation fortschreitet.

3. Anwendung nach Anspruch 2, **dadurch gekennzeichnet**, daß der Spiegel ein Spiegel ist, dessen Öffnungszahl in der Größenordnung von F/1,7 bis F/2 ist und dessen Durchmesser in der Größenordnung von 4 - 8 Metern liegt.

## Claims

1. Variable compensator of spherical aberrations for checking the shape of an aspherical mirror surface, which comprises a displaceable lens unit, characterized in that it also comprises a stationary lens unit, the two units having the same optical axis and being arranged at a distance from each other, said stationary unit having a first lens $(F_1, F'_1)$ located in the vicinity of the centre of curvature of the mirror, that is to say in the caustic of spherical aberration of the mirror, for facilitating the correction of the upper orders of aberration, this lens being followed by a second lens $(F_2 ; F'_2)$ whereof the shape (camber) is determined to compensate the spherical aberration of the 3rd order of the mirror and whereof the power is selected to optimize to best advantage the spatial requirement and the ease of reduction of the upper orders, and said movable unit being formed by an afocal system of three lenses $(F_3, F_4, F_5)$; $(F'_3, F'_5, F'_5)$ calculated so as to compensate the aberration produced by the mirror when its coefficient of aspherization varies from -0.5 to -1 and beyond.

2. Application of a compensator according to Claim 1 to the checking of the shape of an aspherical mirror surface during the progressive formation of the aspherization, characterized in that one of the lenses of the stationary unit is located in the immediate vicinity of the said centre of curvature, and the movable unit is brought closer to the stationary unit as the aspherization progresses.

3. Application according to Claim 2, characterized in that the mirror is a mirror whereof the aperture number is in the order of F/1.7 to F/2 and whereof the diameter is in the order of 4 to 8 m.

FIG.1

(1C)

(1B)

(1A)

FIG.2

(2C)

(2B)

(2A)